# EUROPEAN PATENT SPECIFICATION

(11) **EP 0 456 669 B1**
(45) Date of publication and mention of the grant of the patent: **11.01.1995**
(21) Application number: 90902178.4
(22) Date of filing: 29.01.1990
(51) Int. Cl.: B65F 1/00, E04F 17/10

(54) **APPARATUS FOR SORTING HOUSEHOLD WASTE**
VORRICHTUNG ZUM SORTIEREN VON HAUSABFALL
APPAREIL POUR LE TRIAGE DES ORDURES MENAGERES

(30) Priority: 30.01.1989 DK 398/89
(43) Date of publication of application: 21.11.1991
(73) Proprietor: HALGREEN, Edward Hugh Mc Quiston, DK-4681 Herfolge (DK); PEDERSEN, Jesper Juhl, 2665 Vallensbaek Strand (DK); TREBBIEN, Ralph, DK-2680 Solrod Strand (DK)
(72) Inventor: HALGREEN, Edward Hugh Mc Quiston, DK-4681 Herfolge (DK); PEDERSEN, Jesper Juhl, 2665 Vallensbaek Strand (DK); TREBBIEN, Ralph, DK-2680 Solrod Strand (DK)
(74) Representative: Wittrup, Flemming
(86) International application number: DK9000027
(87) International publication number: WO9008714

(56) References cited:
- DE-A- 332 742
- DE-A- 3 011 527
- NO-B- 117 879
- SE-A- 7 300 174
- SE-B- 346 580
- SE-B- 388 182

## Description

This invention relates to an apparatus for sorting for example household waste having been precategorized and placed in separate packings, such as bags, which are disposed of by dropping them through rubbish chute hatches in a multistorey dwelling, the apparatus comprising a slide being rotatable about a preferably vertical axis and placed between the discharge opening of the rubbish chute and a number of skips each collecting one specific category of waste, the said slide, by activation of one of the pushbuttons of a pushbotton panel arranged at each disposal hatch, being adapted for rotation to a position in which the discharge opening of the slide is positioned over the respective collecting skip of the activated pushbotton.

These known rubbish chutes are usually constructed in such a way that a disposal hatch is provided on each floor through which household waste packed in bags of standard size are dropped. The bags fall freely down the rubbish chute and land in a skip or sack placed under the chute discharge.

In recent years the need has arisen to sort the waste so that a certain amount of, for example, glass and paper can be recycled, but also to enable the removal of some of the waste that causes pollution when incinerated or dumped and to enable the reduction of the amount of waste that has to be dumped.

This sorting is performed most hygienically and economically in the form of sorting at source. There are several systems in which waste from single-family detached houses, terraced houses, etc. is sorted.

DE-A-3011527 describes a sorting apparatus, the distinguishing feature of which is an inclined slide located under the chute discharge. The slide can be rotated around its vertical axis and since its position can be controlled from a pushbutton panel located at the disposal hatches the bags of waste dropping down the chute can be distributed into skips placed in a circle under the slide.

In this construction the slide is located centrally under the chute discharge. The vertical shaft of the slide, about which it rotates, is supported in a guide bearing. The bearing is mounted in a frame which is suspended from the ceiling of the chamber which accommodates the discharge. The skips in which the waste is to be collected are placed under the frame. The length of the slide is such that it reaches the skips. In principle, there can be as many skips as space in the discharge chamber allows. A horizontal circular ring is fitted around the slide with its centre coinciding with the vertical axis of the slide.

However, this known sorting apparatus occupies more space than is often available in normal discharge chambers.

The object of the invention is to provide a sorting apparatus of the type stated in the opening paragraph which has a compact construction occupying less space in the discharge chamber than known before, and which moreover has a simple form and can be economically manufactured.

This is achieved in that the slide is shaped like a broad hopper preferably having an axis of rotation being excentrically displaced relatively to the vertical centre line of the rubbish chute and an upper periphery which in any one of the positions of the hopper reaches horizontally in excess of at least the main part of the discharge of the rubbish chute, and that the discharge opening is a cut out from the deepest point of the hopper towards a point at its upper periphery and being sufficiently large to allow a full waste bag to drop freely through it.

This opening is large enough to ensure that a waste bag landing at any point in the hopper will fall through it and drop into the skip placed at the appropriate position. An apparatus having this form is independent of the location of the discharge and therefore distribution, erection and production become much easier.

The following drawings show the sorting apparatus:
fig. 1 shows a plan view of an apparatus with rotating hopper, for any discharge position, and
fig. 2 shows a vertical cross-section a-a of the apparatus in fig. 1.

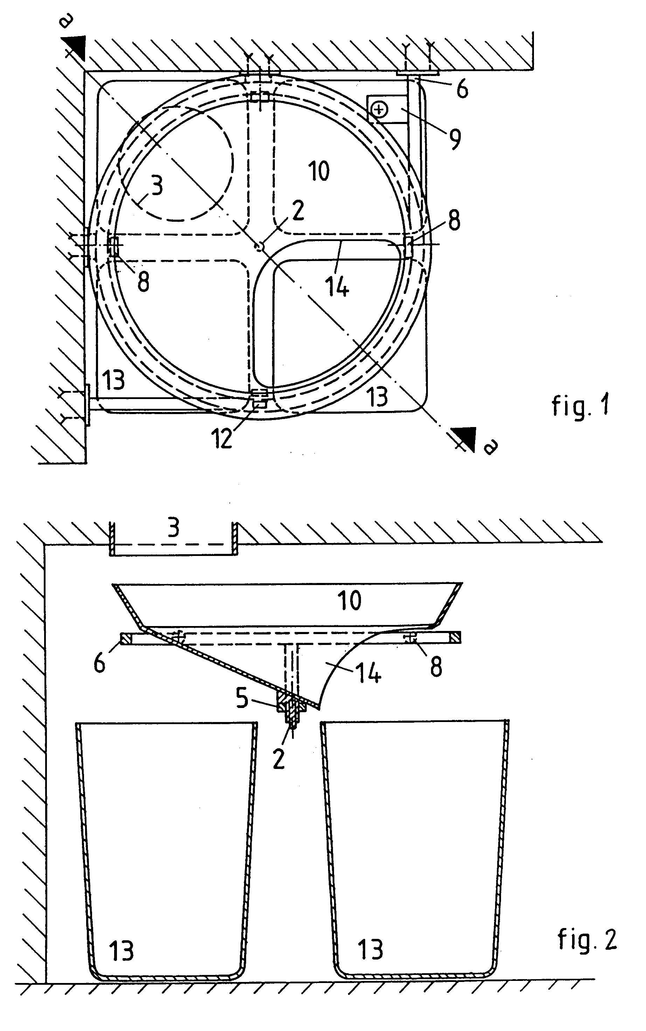

The sorting apparatus shown in fig. 1 and fig. 2 has a broad hopper 10 which can rotate about a vertical shaft 2 placed under the chute discharge 3. On the hopper 10 a circular ring or rims are located concentrically in relation to the vertical sharft 2 of the hopper. The shaft is supported in an axial bearing 5. The bearing is fitted to a light frame 6 suspended from the discharge chamber ceiling. A number of guide rollers 8 are mounted on the frame 6 to support the hopper ring. Fig. 1 shows the motor 9 with a friction wheel in contact with the ring to rotate the hopper 10. The skips 13, in this case four in number, are placed on the discharge chamber floor to collect sorted waste.

Opposite the ring 4, the frame 6 carries a pulse source for each skip 13. Mounted on the ring, a contact maker 12 gives a signal via the electronic control unit, when it travels near one of the pulse sources, provided it is activated by a pushbutton at the disposal hatch. The motor 9 is then stopped so that the hopper 10 stops at precisely the position where a bag will drop into the skip at the activated pulse source.

There is nothing to prevent the placing of more or fewer skips. The ring and the frames 6 must then be adapted to suit the changed skip arrangement.

The hopper must have a diameter sufficiently large at the upper edge so that it reaches over the skips 13 beneath it, whereas the upper part of the hopper 10 is supported by guide rollers 8, is equipped with the contact maker 12, and can be rotated by the motor 9. An opening 14 cut out of the hopper must be sufficiently large to allow a waste bag falling from the discharge 3 to inevitably drop through the opening 14 and land in the skip above which the opening is preset to stop.

The form of the apparatus shown in figs. 1 and 2 need not be changed, whatever the location of the discharge. This means more rational production.

## Claims

1. Apparatus for sorting for example household waste having been precategorized and placed in separate packings, such as bags, which are disposed of by dropping them through rubbish chute (3) hatches in a multistorey dwelling, the apparatus comprising a slide being rotatable about a preferably vertical axis and placed between the discharge opening of the rubbish chute (3) and a number of skips (13) each collecting one specific category of waste, the said slide, by activation of one of the pushbuttons of a pushbutton panel arranged at each disposal hatch, being adapted for rotation to a position in which the discharge opening (14) of the slide is positioned over the recpective collection skip (13) of the activated pushbutton, **characterized** in that the slide is shaped like a broad hopper (10) preferably having an axis of rotation being excentrically displaced relatively to the vertical centre line of the rubbish chute 3 and an upper periphery which in any one of the positions of the hopper (10) reaches horizontally in excess of at least the main part of the discharge of the rubbish chute (3), and that the discharge opening (14) is a cut out (14) from the deepest point of the hopper (10) towards a point at its upper periphery and being sufficiently large to allow a full waste bag to drop freely through it.

## Patentansprüche

1. Vorrichtung zum Sortieren von beispielsweise Haushaltabfall der vorkategorisiert und in getrennten Verpackungen, wie Säcken, plaziert worden ist, welche durch Fallenlassen durch Luken einer Müllrutsche (3) in einem mehrstöckigen Wohnhaus entsorgt werden, mit einer Gleitbahn, die um eine vorzugsweise vertikale Achse drehbar und zwischen der Auslassöffnung der Müllrutsche (3) und einer Anzahl je eine bestimmte Abfallkategorie sammelnden Containern (13) angeordnet ist, wobei die Gleitbahn dazu bestimmt ist, durch Betätigung einer der Drucktasten eines bei jeder Entsorgungsluke angeordneten Drucktastenpaneels in eine Stellung gedreht zu werden, in welcher die Auslassöffnung (14) der Gleitbahn sich über dem jeweiligen Sammelcontainer (13) der betätigten Drucktaste befindet, dadurch gekennzeichnet, dass die Gleitbahn wie ein breiter Trichter (10) geformt ist und vorzugsweise eine bezüglich der vertikalen Mittellinie der Müllrutsche (3) exzentrisch angeordnete Drehachse und einen oberen Umfang aufweist, welcher in jeder der Stellungen des Trichters (10) horizontal über mindestens den Hauptteil des Auslasses der Müllrutsche (3) hinausreicht, und dass die Auslassöffnung (14) ein vom tiefsten Punkt des Trichters (10) in Richtung auf einen Punkt an seinem oberen Umfang gehender Ausschnitt (14) und ausreichend gross ist, um einen vollen Müllsack frei hindurch fallen lassen zu können.

## Revendications

1. Appareil pour séparer par exemple des déchets ménagers triés au préalable et placés dans des emballages séparés, tels que des sacs, qui sont évacués en les laissant tomber par des trappes dans un tube (3) d'un vide-ordures d'un immeuble d'appartements, l'appareil comprenant une glissière qui peut tourner autour d'un axe de préférence vertical et qui est placée entre la sortie du tube (3) du vide-ordures et un certain nombre de bennes (13), chacune recevant une catégorie particulière de déchets, ladite glissière étant conçue pour tourner vers une position dans laquelle l'ouverture d'évacuation (14) de la glissière est positionnée au-dessus de la benne de réception choisie (13), le choix se faisant en pressant un des boutons-poussoirs d'un panneau de boutons-poussoirs, disposé à chaque trappe d'évacuation, **caractérisé en ce que** la glissière est formée comme une large trémie (10) ayant de préférence un axe de rotation excentré par rapport à la ligne centrale verticale du tube (3) du vide-ordures et une périphérie supérieure qui, dans une quelconque des positions de la trémie (10) arrive horizontalement au-delà d'au moins la majeure partie de la sortie du tube (3) du vide-ordures et en ce que l'ouverture d'évacuation (14) est découpée (14) à partir du point le plus bas de la trémie (10) vers un point à sa périphérie supérieure en étant suffisamment large pour permettre à un sac plein de déchets de tomber librement par cette ouverture.
